# EUROPEAN PATENT SPECIFICATION

(11) **EP 1 602 517 B1**
(45) Date of publication and mention of the grant of the patent: **21.05.2008**
(21) Application number: 05011630.0
(22) Date of filing: 30.05.2005
(51) Int. Cl.: B60H 1/34

(54) **Air blowout outlet structure for vehicle**
Fahrzeugluftausströmöffnungsanordnung
Structure de buse d'air pour véhicule

(30) Priority: 31.05.2004 JP 2004161850
(43) Date of publication of application: 07.12.2005
(73) Proprietor: NIHON PLAST CO., LTD., Fuji-shi, Shizuoka 417-0047 (JP)
(72) Inventor: Kamano, Yoshifumi c/o NIHON PLAST CO.,.LTD., Fuji-shi Shizuoka 417-0047 (JP); Ishikawa, Hiroyuki c/o NIHON PLAST CO.,LTD:, Fuji-shi Shizuoka 417-0047 (JP); Nakamura, Tatsuhiko c/o NIHON PLAST CO.,LTD., Fuji-shi Shizuoka 417-0047 (JP)
(74) Representative: Grünecker, Kinkeldey, Stockmair & Schwanhäusser Anwaltssozietät

(56) References cited:
- EP-B- 0 842 058
- FR-A- 2 238 607
- PATENT ABSTRACTS OF JAPAN vol. 1999, no. 10, 31 August 1999 (1999-08-31) & JP 11 129743 A (DAIHATSU MOTOR CO LTD), 18 May 1999 (1999-05-18)
- PATENT ABSTRACTS OF JAPAN vol. 010, no. 286 (M-521), 27 September 1986 (1986-09-27) & JP 61 105211 A (NISSAN MOTOR CO LTD), 23 May 1986 (1986-05-23)

## Description

### BACKGROUND OF THE INVENTION

### Field of the Invention

The present invention relates to improvements in a structure of an air blowout outlet for a vehicle, which can blow out air to an inner surface of a window glass such as a front window glass or an interior of a passenger compartment uniformly and extensively.

### Description of the Prior Art

In a vehicle such as automobile, air blowout outlets are opened at appropriate places in a interior of a passenger compartment, and air conditioned by an air conditioner is blown out from the air blowout outlets to the interior of a passenger compartment. Document FR 7425310, which is considered as the closest prior art, discloses such an air blowout outlet.

The air blowout outlets include an air blowout outlet for keeping environment of the interior of a passenger compartment comfortable by blowing out the air conditioned by the air conditioner to the interior of a passenger compartment, in addition, an air blowout outlet for defroster for preventing fogging of the window glass with steam by blowing dry air from an air blowout outlet opened near an inside of the window glass to the inner surface of the window glass.

While an air stream direction adjusting device is typically provided at the air blowout outlet for blowing out the air for air conditioning to the interior of a passenger compartment, and a direction of the air blown out from the air blowout outlet can be freely adjusted by the air stream direction adjusting device, a stationary blade is provided at the air blowout outlet for defroster for blowing the dry air to the inner surface of the window glass, and the fogging of the window glass with steam is prevented by diffusing air using the stationary blade.

However, since the air blown out from the air blowout outlet can not be extensively diffused only by providing the stationary blade at the air blowout outlet, there is a problem that sufficient defogging effects can not be obtained, for example, there is a problem that a fogged area is remained on a part of the window glass.

To solve such a problem, for example, Japanese Patent Provisional Publication No. 11-129743 discloses a "defroster duct structure for automobile" in which defogging of the window glass such as front window glass or side window glass can be sufficiently performed.

The defroster duct structure described in the above Japanese Patent Provisional Publication is a structure where one end of each of a pair of side ducts on either side is coupled to a connected portion between a blowout nozzle having a dimension in a vehicle width direction, which gradually increases toward a side of the air blowout outlet opened inside the front window glass, and a main duct, and the other end of each of the side ducts is opened toward a lower inner-surface of the side window glass.

Moreover, a step is formed on at least one of a front wall or a rear wall extending from a portion to another portion of the main duct, and a bottom of the step is used as a guide face for air flowing from the main duct to the side duct, and thus the side window glass can be sufficiently defogged by the air blown out from the side duct, at the same time the front window glass id defogged.

However, in the defroster structure described in the above Japanese Patent Provisional Publication, since the blowout nozzle for guiding the air, which is to be blown to the inner surface of the front window glass, to the air blowout outlet is formed in a way that the dimension gradually increases in the vehicle width direction with approaching the side of the air blowout outlet, there is a problem that, in the air flown from the main duct into the blowout nozzle, flow velocity drastically decreases with approaching the air blowout outlet, as a result the air blown out from the air blowout outlet to the inner surface of the front window glass does not sufficiently reach to, for example, two upper corners of the front window glass distant from the air blowout outlet, or even if it reaches there, since the flow rate is small, flogging can not be prevented at the corner portions.

In addition, there is a problem that since a dimension of the air blowout outlet needs to be increased in accordance with the blowout nozzle of which the dimension gradually increases in the vehicle width direction toward the air blowout outlet, an opening area of the air blowout outlet becomes large, thereby appearance of an instrument panel becomes bad, and when the main duct, side duct, and blowout nozzle are formed with injection molding using resin, a separable mold is necessary, resulting in increase in mold cost.

Although there is a method for forming the main duct, side duct, and blowout nozzle with blow molding in order to cut down the mold cost, since molding accuracy is reduced in the method, air distribution characteristics or increase in resistance of a flow channel may have effects on blowout efficiency.

### BRIEF SUMMARY OF THE INVENTION

Therefore, it is an object of the present invention to provide an improved structure of the air blowout outlet for a vehicle, which can effectively overcome drawbacks encountered in conventional techniques of the similar nature.

Another object of the present invention is to provide an improved structure of the air blowout outlet for a vehicle, which can blow out air to the inner surface of the window glass such as front window glass or the interior of a passenger compartment uniformly and extensively.

According to the present invention, a structure of an air blowout outlet for a vehicle, comprises a case having an air inlet through which air is supplied. A pair of first wall sections extend in a longitudinal direction of the case. A pair of second wall sections are provided in such a manner that each second wall section connects end portions of the first wall sections. The first wall sections and the second wall sections define an air outlet through which air supplied from the air inlet is blown out. A first guide (unit) is formed at an inner surface of the second wall sections to extend in a longitudinal direction of the case so as to squeeze air introduced from the air inlet. Additionally, a second guide (unit) is formed at an inner surface of the first wall sections. A central portion of the second guide in the longitudinal direction of the case extends larger than an end portion of the second guide in the longitudinal direction of the case so that the central portion squeezes air larger than the end portion. It will be understood that the term "squeezing air" means decreasing a dimension in cross-section of stream of the air.

With the above configuration, when the air discharged from the opening to the air blowout outlet with being squeezed by the first guide is further squeezed in the fore-and-aft direction perpendicular to the longitudinal direction of the air blowout outlet by the second guide unit, since the air is squeezed such that the squeezing degree at the center side is large compared with the two end sides of the opening, the air discharged from the opening to the air blowout outlet is formed into laminar flow having an approximately equalized flow rate and blown out from the air blowout outlet to the inner surface of the front window glass with being diffused in the vehicle width direction. Accordingly, since the dry air is blown over a wide area of the window glass, fogging of the front window glass can be evenly removed.

Since the air flow directing to the air blowout outlet in the case is squeezed in the longitudinal direction of the air blowout outlet by the first guide unit and squeezed in a direction perpendicular to the longitudinal direction of the air blowout outlet by the second guide unit, thereby approaches the air blowout outlet with increasing flow velocity and is released immediately before the air blowout outlet, the air flow blown out from the air blowout outlet is diffused over a wide area of the inner surface of the window glass or the interior of a passenger compartment. Accordingly, even if the opening area of the air blowout outlet is made small compared with the conventional one, since the air can be uniformly blown out over the wide area of the inside of the window glass or the interior of a passenger compartment, in the case of the air blowout outlet for defroster, the fogging of the window glass can be evenly removed, in addition, since a large air-blowout-outlet need not be opened in the instrument panel, appearance of and near the instrument panel is remarkably improved.

In the above air blowout outlet structure for a vehicle, the second guide unit includes at least one guide wall provided at the opening. Each guide wall has a front edge which is formed in an approximately arcuate shape in plan so that the squeezing degree is higher at the center side of the opening in the longitudinal direction than at the two end portions of the opening in the longitudinal direction.

With the configuration, since the air can be squeezed such that the squeezing level at the center side gradually increases compared with the two ends of the opening, pressure loss due to flow-channel resistance of the second guide unit can be decreased. Accordingly, the air can be efficiently blown out from the air blowout outlet to the inner surface of the window glass or the interior of a passenger compartment.

Additionally, in the above air blowout outlet structure for a vehicle, the guide wall is provided obliquely upward from the opening periphery of the opening in a protruding manner so as to form the second guide unit.

With the configuration, since control for squeezing the air such that the squeezing level at the center side gradually increases compared with the two ends of the opening is easily performed, in addition, the second guide unit can be integrally formed with the first guide unit, the structure of air blowout outlet for a vehicle can be provided at a low price.

### BRIEF DESCRIPTION OF THE DRAWINGS

In the drawings, like reference numerals designate like elements and parts throughout all figures, in which:
Fig. 1 is a perspective view of an instrument panel using a structure of the air blowout outlet for a vehicle according to an embodiment of the invention;
Fig. 2 is an enlarged diagrammatic view as viewed from the direction A of Fig. 1;
Fig. 3 is a cross sectional view taken along the line B-B of Fig. 2;
Fig. 4 is a cross sectional view taken along the line C-C of Fig. 2;
Fig. 5 is a perspective view of air blowout members forming the structure of the air blowout outlet for a vehicle according to the embodiment of the invention;
Fig. 6 is an exploded perspective view of the air blowout members forming the structure of air blowout outlet for a vehicle according to the embodiment of the invention;
Fig. 7 is an explanatory view for illustrating operation of the structure of the air blowout outlet for a vehicle according to the embodiment of the invention; and
Fig. 8 is an explanatory view for illustrating a modified example of the air blowout members forming the structure of the air blowout outlet for vehicle according to the invention.

### DBTAILED DESCRIPTION OF THE INVENTION

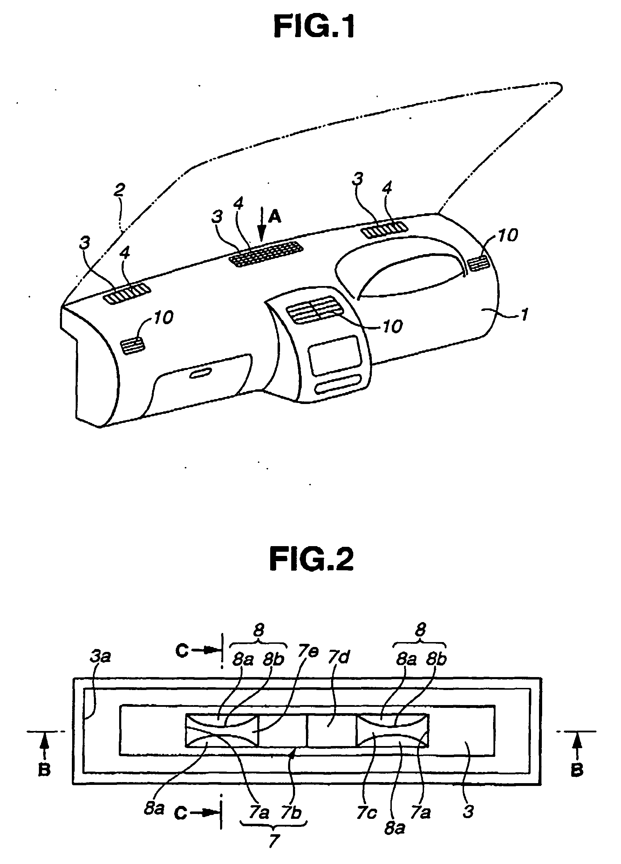

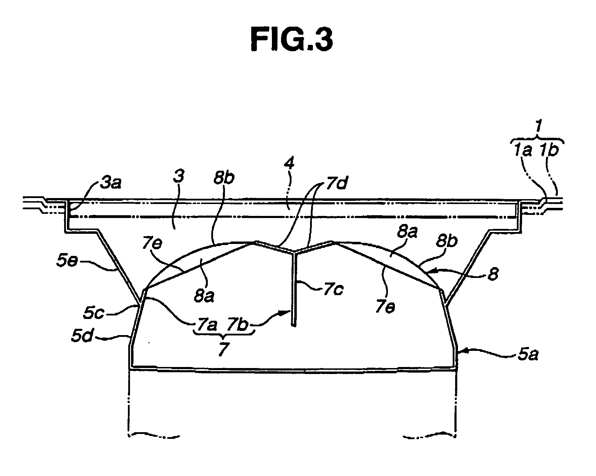

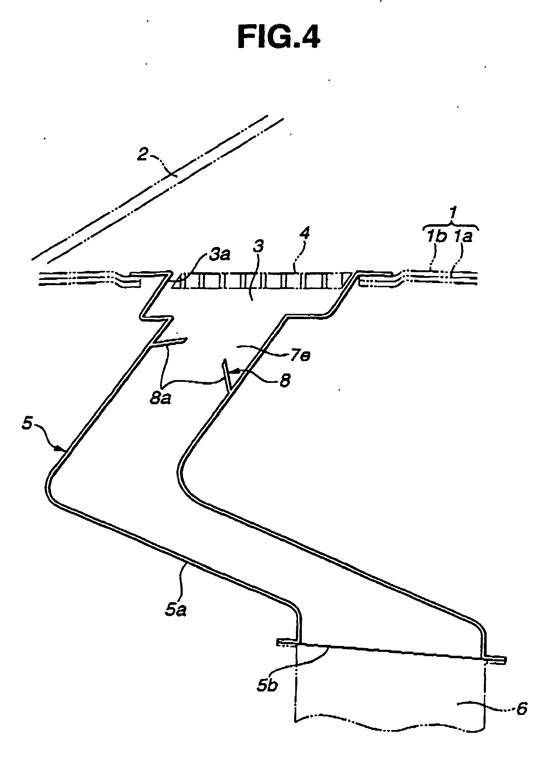

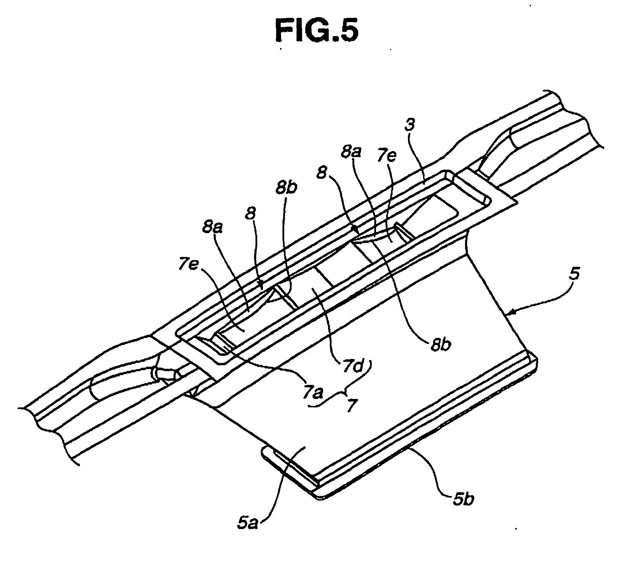

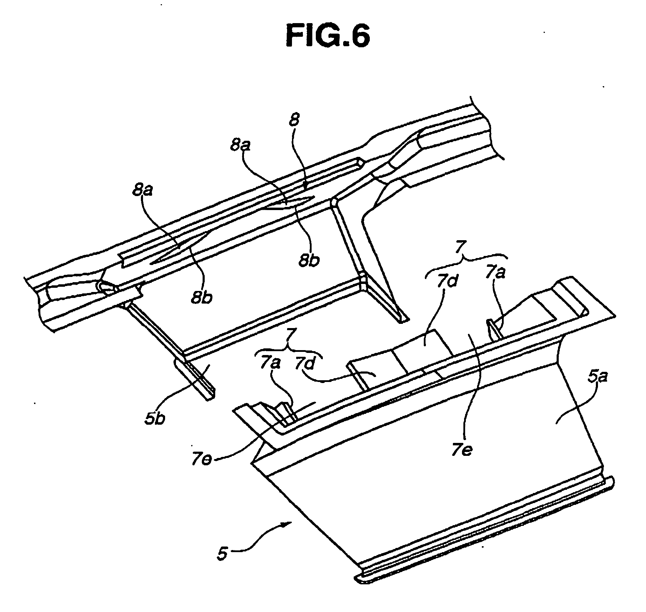

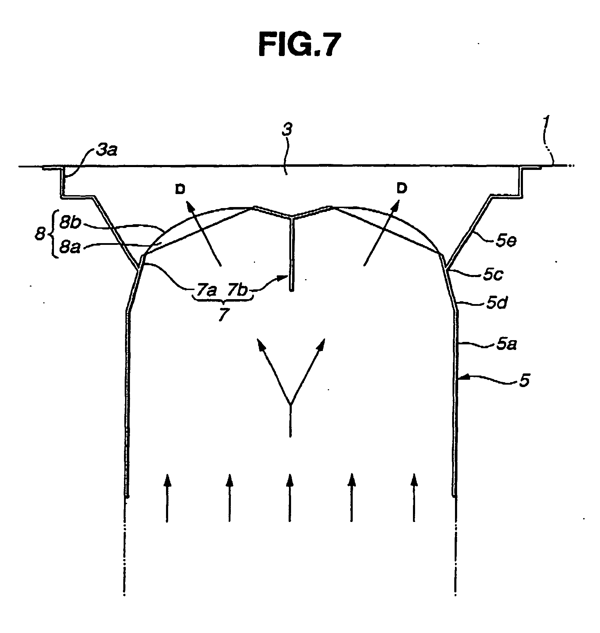

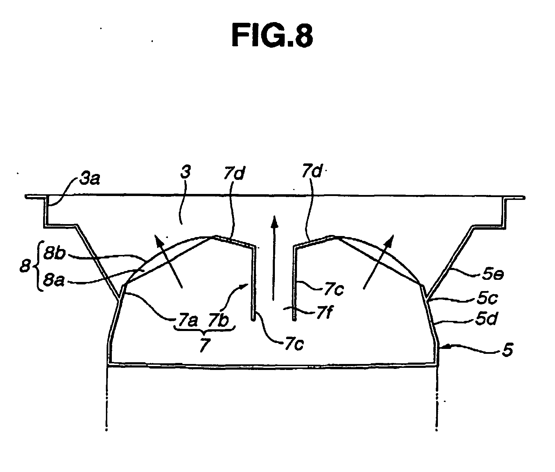

Discussion will be made in detail on an embodiment of the present invention where the invention is applied to an air blowout outlet structure for a defroster arranged to blow out air to the inner surface of a front window glass of an automotive vehicle, with reference to Fig. 1 to Fig. 7 of the drawings. In The drawings, Fig. 1 is a perspective view of an instrument panel using a structure of the air blowout outlet for a vehicle according to an embodiment of the invention; Fig. 2 is an enlarged diagrammatic view as viewed from the direction A of Fig. 1; Fig. 3 is a cross sectional view taken along the line B-B of Fig. 2; Fig. 4 is a cross sectional view taken along the line C-C of Fig. 2; Fig. 5 is a perspective view of air blowout members forming the structure of the air blowout outlet for a vehicle according to the embodiment of the invention; Fig. 6 is an exploded perspective view of the air blowout members forming the structure of air blowout outlet for a vehicle according to the embodiment of the invention; Fig. 7 is an explanatory view for illustrating operation of the structure of the air blowout outlet for a vehicle according to the embodiment of the invention; and Fig. 8 is an explanatory view for illustrating a modification example of the air blowout members forming the structure of the air blowout outlet for vehicle according to the invention.

The vehicle includes an instrument panel 1 arranged in the fore of a interior of a passenger compartment and in a shape elongated in a vehicle width direction as shown in Fig.1, and has a structure where a surface of a core material 1a molded using hard resin is covered with a skin 1b comprising soft resin as shown in Fig. 3 and Fig. 4.

At the fore of the instrument panel 1, a front window glass 2 having an upper side inclined backward is provided inclining in such a manner that the upper side of the front window glass is located backward as compared with the lower side of the front window glass. At the fore of the instrument panel 1 contacting to the lower side of the front window glass 2, air blowout outlets 3 for a defroster are opened at a central portion and two opposite sides of the instrument panel 1.

The air blowout outlets 3 are in a shape of an ellipse or a rectangle elongated in a vehicle width direction. The air blowout outlet 3 at the central portion is longer than the air blowout outlets 3 at the opposite two sides. Safety members 4 against foreign substances in a form of net or lattice, which prevents the foreign substances from dropping into the air blowout outlets 3, are fitted into the openings 3a of respective air blowout outlets 3. An air blowout member 5 includes a case 5a in a shape of flat square-cylinder having a cross-section whose width and length are almost equal to or more than those of the air blowout outlet 3. The air blowout member is connected to a lower portion of the air blowout outlet 3 at the central portion.

The case 5a of the air blowout member 5 is formed by injection molding using resin or plastic such as polypropylene or ABS in a condition that it is divided in two in a fore-and-aft direction of the vehicle as shown in Fig. 6. After the molding, the divided members are assembled with each other as a single member as shown in Fig. 5. A lower part of the case 5a is bent in an approximately dogleg pattern as shown in Fig. 4. A squeezing section 5c. which squeeze the air that is conditioned by a not-shown air conditioner mounted in a vehicle and flown from an opening 5b at a lower end side of the case 5a into the case 5a via a duct 6 in a longitudinal direction (vehicle width direction) of the air blowout outlet 3, is formed at the opposite two sides of the case 5a.

As shown in Fig. 3, the squeezing section 5c of the case 5a includes a body sidewall 5d inclined to gradually narrow toward an upper side. An upper sidewall 5e is connected to an upper portion of the body sidewall 5d and increasingly opened toward a side of the air blowout outlet 3. The squeezing section 5c includes a first guide unit 7 for diverting the flow of the air squeezed by the squeezing section 5c into multiple channels, for example, two channels with further squeezing the air in the longitudinal direction of the air blowout outlet 3. The squeezing section 5c further includes a second guide unit 8 for further squeezing the air squeezed by the first guide unit 7 in the fore-and-aft direction perpendicular to the longitudinal direction of the air blowout outlet 3.

The first guide unit 7 includes side guide-walls 7a straightly protruded from intermediate sidewalls 5d of the case 5a to the side of the air blowout outlet 3, and a center guide-wall 7b provided at an approximately center of respective side guide-walls 7a.

The center guide-wall 7b is located above as compared with the side guide-walls 7a and includes a dividing wall 7c for dividing an inside of the case 5a in a vehicle width direction and branching walls 7d protruded obliquely upward from an upper part of the dividing wall 7c, arranged in an approximately Y-shaped in section. Openings 7e for blowing out the air to the air blowout outlet 3 are formed between ends of the side guide-walls 7a and the branching wall 7d. The second guide unit 8 is provided at the openings 7e.

The second guide unit 8 is to further squeeze the air, which has been squeezed by the squeezing section 5c of the case 5a and the first guide unit 7 in the vehicle width direction to increase flow velocity of the air, in the fore-and-aft direction and guide the air to the air blowout outlet 3. As shown in Fig. 2 and Fig. 3, the unit 8 includes a pair of guide walls 8a provided obliquely upward from front and rear edges or peripheries of the openings 7e of the first guide unit 7 in a protruding manner. Each guide wall 8a has an arcuate portion 8b whose front end edge is arcuate in cross-section, so that the guide wall 8a is formed into an approximately half-moon shape.

The arcuate portion 8b of each of the guide walls 8a has a dimension in the fore-and-aft direction that decreases in a direction approaching an upper side, so that the openings 7e of the first guide unit 7 are opened to have an approximately dumbell shape (in plan) where the width (in plan) of each opening 7e gradually increases from the center side toward the opposite two end sides in the longitudinal direction as shown in Fig. 2. Accordingly, the air flown from the duct 6 into the case 5a is squeezed by the side guide-walls 7a and the center wall 7b of the first guide unit 7 and the guide walls 8a of the second guide unit 8, and then blown out toward the inner surface of the front window glass 2 via the air blowout outlet 3.

Reference numeral 10 in Fig. 1 is an air blowout outlet for blowing out air to the interior of the passenger compartment.

Next, operation of the structure of the air blowout outlet for vehicle is described with reference to Fig. 7. Air conditioned by the air conditioner mounted in the vehicle is flown into the case 5a of the air blowout member 5 arranged inside the instrument panel 1 via the duct 6, and then the air is first squeezed in the longitudinal direction of the air blowout outlet 3 by the squeezing section 5c of the case 5a on a way to the air blowout outlet 3 opened inside the front window glass 2, so that flow velocity increases.

Then, the air is further squeezed in the longitudinal direction of the air blowout outlet 3 by the first guide unit 7 provided at a downstream of the squeezing section 5c, thereby further increasing the flow velocity. The air is diverted in two channels by the center guide wall 7b of the first guide unit 7, and then discharged from the openings 7e of the first guide unit 7 to the two end sides in the longitudinal direction of the air blowout outlet 3 as indicated by an arrow D.

The second guide units 8 are provided at the openings 7e of the first guide unit 7, and the air discharged from the openings 7e to the two end sides in the longitudinal direction of the air blowout outlet 3 is further squeezed in the fore-and-aft direction perpendicular to the longitudinal direction of the air blowout outlet 3 by the guide walls 8a of the second guide unit 8, so that the air is formed into a laminar flow. Since the guide walls 8a of the second guide unit 8 have a front edge forming part of the arcuate portion 8b, the squeezing level or degree at the center side is high compared with the opposite two end sides of the opening 8e. Accordingly, the air discharged from the openings 7e reaches to the air blowout outlet 3 upon being formed into the laminar flow having an approximately equalized flow rate, and then the air is blown out from the air blowout outlet 3 to the inner surface of the front window glass 2 with being formed into a two-channel flow and diffused in the vehicle width direction.

Accordingly, since dry air is uniformly blown out over a wide area of the front window glass 2, the fogging of the front window glass 2 can be evenly removed. Additionally, since the ends of the guide walls 8a of the second guide unit 8 are formed arcuate, the air can be squeezed such that the squeezing level or degree at the center side gradually increases compared with the opposite two end sides of the opening 7e. As a result, a pressure loss due to flow-channel resistance of the second guide unit 8 can be decreased, and therefore the air can be efficiently blown out from the air blowout outlet 3.

Moreover, the air squeezed in the vehicle width direction and the fore-and-aft direction by the first and second guide units 7, 8 is blown out from the air blowout outlet 3, so that an opening area of the air blowout outlet 3 can be remarkably reduced compared with a conventional one. Therefore, appearance of and near the instrument panel 1 is improved. In addition, reduction in size of the case 5 accompanied with reduction in area of the air blowout outlet 3 enables that the case 5 can be easily positioned even in a small space within the instrument panel 1 or a small space such as inside of an interior material for furnishing the interior of the passenger compartment.

Although the first guide unit 7 are constituted of the side guide-walls 7a and the center guide wall 7b so that the air squeezed by the squeezing section 5c of the case 5a was diverted in two channels and discharged from the air blowout outlet 3 in the embodiment, it will be understood that, as a modified example shown in Fig.8, a passage 7f is formed at the central portion of the center guide wall 7b so that the air squeezed by the squeezing section 5c may be diverted in three channels of center and two side channels and discharged from the air blowout outlet 3. According to the this modified example, since the air can be blown out even to the vicinity of the center of the front window glass 2, so that the fogging of the front window glass 2 can be removed further evenly.

Although both of the two guide walls 8a of the second guide unit 8 are inclined obliquely upward in the embodiment and the modified example, it may be acceptable that the guide wall 8a at a window side is not inclined so as to stand approximately upright or be bent.

Furthermore, although the air flown into the case 7a is diverted in two or three channels by the first guide unit 7 and then discharged to the air blowout outlet 3 in the embodiment and the modified example, it may be discharged to the air blowout outlet 3 without being diverted. In this case, a single opening 7e may be provided upward at a place in the first guide unit 7, and additionally, the principle of the present invention may be applied not only to the air blowout outlet 3 for defroster for the front window glass 2 but also to an air blowout outlet for defroster for a side window glass, or the air blowout outlet 10 for blowing out air to the interior of the passenger compartment.

Although two openings 7e are disposed in parallel in the embodiment, it will be appreciated that a single opening 7e may be provided without being limited to that in the embodiment.

It will be understood that, in the structure of the air blowout outlet for vehicle of the invention, the air squeezed in the longitudinal direction of the air blowout outlet by the first guide unit is approximately unified by the second guide unit and diffused from the air blowout outlet over the wide area of the inner surface of the window glass or the interior of the passenger compartment. Therefore, the structure is preferable for a structure of the air blowout outlet for vehicle, which evenly removes the fogging of the window glass, or makes temperature of the interior of the passenger compartment to be optimum in a short time.

As appreciated from the above, according to the present invention, a structure of an air blowout outlet for a vehicle, includes a case having an air inlet through which air is supplied. A pair of first wall sections extend in a longitudinal direction of the case. A pair of second wall sections are provided in such a manner that each second wall section connects end portions of the first wall sections. The first wall sections and the second wall sections define an air outlet through which air supplied from the air inlet is blown out. A first guide (unit) is formed at an inner surface of the second wall sections to extend in a longitudinal direction of the case so as to squeeze air introduced from the air inlet. Additionally, a second guide (unit) is formed at an inner surface of the first wall sections. A central portion of the second guide in the longitudinal direction of the case extends larger than an end portion of the second guide in the longitudinal direction of the case so that the central portion squeezes air larger than the end portion.

Accordingly, since the air squeezed in the longitudinal direction of the air blowout outlet by the first guide unit is approximately unified by the second guide unit and diffused from the air blowout outlet over the wide area of the inner surface of the window glass or the interior of the passenger compartment, in the case of the air blowout outlet for defroster, the fogging of the front window glass can be evenly removed, and in the case of the air blowout outlet for blowing out the air to the interior of the passenger compartment, temperature of the interior of the passenger compartment can be made optimum in a short time, resulting in improvement in comfortableness in the interior of the passenger compartment.

Although the invention has been described above by reference to certain embodiments and examples of the invention, the invention is not limited to the embodiments and examples described above. Modifications and variations of the embodiments and examples described above will occur to those skilled in the art, in light of the above teachings. The scope of the invention is defined with reference to the following claims.

## Claims

1. An air blowout outlet structure for a vehicle, comprising:
a case (5) including means defining an air inlet(5b) through which air is supplied, a pair of first wall sections extending in a longitudinal direction of the case (5), and a pair of second wall sections (5d), each second wall section (5d) connecting end portions of the first wall sections, the first wall sections and the second wall sections (5d) defining an air outlet(3) having an opening (7e) through which air supplied from the air inlet is blown out;
a first guide (7) formed at an inner surface of the second wall sections (5d) to extend in a longitudinal direction of the case (5) so as to squeeze air introduced from the air inlet; and
a second guide (8) formed at an inner surface of the first wall sections, a central portion of the second guide (8) in the longitudinal direction of the case (5) extending larger than an end portion of the second guide (8) in the longitudinal direction of the case (5) so that the central portion squeezes air larger than the end portion.

2. The air blowout outlet structure for a vehicle as claimed in claim 1,**characterized in that** the second guide (8) include at least one guide wall(8a) provided at the opening (7e), the guide wall having a front edge (8b) which is formed in an approximately arcuate shape in plan.

3. The air blowout outlet structure for a vehicle, as claimed in claim 2, **characterized in that** the guide wall is provided obliquely upward from the opening periphery of the opening (7e) in a protruding manner so as to form the second guide (8).

## Patentansprüche

1. Luftausblas-Auslassstruktur für ein Fahrzeug, die umfasst:
eine Verkleidung (5), die eine Einrichtung, die einen Lufteinlass (5b) bildet, über den Luft zugeführt wird, ein Paar erster Wandabschnitte, die sich in einer Längsrichtung der Verkleidung (5) erstrecken, und ein Paar zweiter Wandabschnitte (5d) enthält, wobei jeder zweite Wandabschnitt (5d) Endbereiche der ersten Wandabschnitte verbindet und die ersten Wandabschnitte und die zweiten Wandabschnitte (5d) einen Luftauslass (3) mit einer Öffnung (7e) bilden, über die von dem Lufteinlass zugeführte Luft ausgeblasen wird;
eine erste Führung (7), die an einer Innenfläche der zweiten Wandabschnitte (5d) so ausgebildet ist, dass sie sich in einer Längsrichtung der Verkleidung (5) erstreckt, um über den Lufteinlass eingeleitete Luft zusammenzudrücken; und
eine zweite Führung (8), die an einer Innenfläche der ersten Wandabschnitte ausgebildet ist, wobei sich ein Mittelbereich der zweiten Führung (8) in der Längsrichtung der Verkleidung (5) weiter erstreckt als ein Endbereich der zweiten Führung (8) in der Längsrichtung der Verkleidung (5), so dass der Mittelbereich Luft stärker zusammendrückt als der Endbereich.

2. Luftausblas-Auslassstruktur für ein Fahrzeug nach Anspruch 1, **dadurch gekennzeichnet, dass** die zweite Führung (8) wenigstens eine Führungswand (8a) enthält, die an der Öffnung (7e) vorhanden ist, wobei die Führungswand eine Vorderkante (8b) aufweist, die in Draufsicht annähernd bogenförmig ausgebildet ist.

3. Luftausblas-Auslassstruktur für ein Fahrzeug nach Anspruch 2, **dadurch gekennzeichnet, dass** die Führungswand von dem Öffnungsrand der Öffnung (7e) schräg nach oben vorstehend ausgebildet ist, um die zweite Führung (8) zu bilden.

## Revendications

1. Structure de sortie de soufflage d'air pour un véhicule, comprenant :
un boîtier (5) incluant un moyen définissant une entrée d'air (5b) à travers laquelle l'air est fourni, une paire de premières sections de paroi s'étendant dans une direction longitudinale du boîtier (5), et une paire de secondes sections de paroi (5d), chaque seconde section de paroi (5d) reliant des portions d'extrémité des premières sections de paroi, les premières sections de paroi et les secondes sections de paroi (5d) définissant une sortie d'air (3) ayant une ouverture (7e) à travers laquelle l'air fourni par l'entrée d'air est soufflé ;
un premier guidage (7) formé à une surface intérieure des secondes sections de paroi (5d) pour s'étendre dans une direction longitudinale du boîtier (5) de manière à compresser l'air introduit à l'entrée d'air ; et
un second guidage (8) formé à une surface intérieure des premières sections de paroi, une portion centrale du second guidage (8) dans la direction longitudinale du boîtier (5) étant plus large qu'une portion d'extrémité du second guidage (8) dans la direction longitudinale du boîtier (5) de sorte que la portion centrale compresse l'air plus fortement que la portion d'extrémité.

2. Structure de sortie de soufflage d'air pour un véhicule selon la revendication 1, **caractérisée en ce que** le second guidage (8) comprend au moins une paroi de guidage (8a) réalisée à l'ouverture (7e), la paroi de guidage ayant un bord avant (8b) qui est réalisé selon une forme approximativement arquée en plan.

3. Structure de sortie de guidage d'air pour un véhicule selon la revendication 2, **caractérisée en ce que** la paroi de guidage est réalisée en biais vers le haut depuis la périphérie de l'ouverture (7e) d'une manière saillante pour former le second guidage (8).
